# EUROPEAN PATENT APPLICATION

(11) **EP 4 722 925 A1**
(43) Date of publication of application: **08.04.2026**
(21) Application number: 25202107.6
(22) Date of filing: 15.09.2025
(51) Int. Cl.: G06F 11/3668

(54) **METHOD AND SYSTEM FOR AUTOMATED PARAMETRIZED SOFTWARE TESTING**

(30) Priority: 03.10.2024 IN 202421074669
(71) Applicant: Tata Consultancy Services Limited, Mumbai, Maharashtra 400 021 (IN)
(72) Inventor: SHAH, Viral Prakash, 400607 Thane West, Maharashtra (IN); MONALEESHAA, Sonalee, 751024 Bhubaneswar, Odisha (IN); SENAPATI, Mahalaxmi, 751024 Bhubaneswarind, Odisha (IN); SAHOO, Abhaya Kumar, 751024 Bhubaneswar, Odisha (IN)
(74) Representative: Goddar, Heinz J.

(57) **Abstract**

Most of the existing testing tools automate the process of test case execution, however, these depend largely on an expert to manually write the test cases and pass parameters of the software to the test cases. Embodiments of present disclosure provide a method and system for automated parameterized software testing. The method involves- test case design, test case execution and report generation. The test case design involves identifying a set of parameters from a test automation suite for testing a web-based software application. Then, relevant test cases are identified, and a second set of parameters are obtained from the web-based software application. Next, test case execution is done through one or more of: i) a code development tool, ii) a command with arguments, iii) a build tool, and iv) an application server. Finally, a report is generated based on test case execution indicating the status of the test cases.

## Description

### CROSS-REFERENCE TO RELATED APPLICATIONS AND PRIORITY

The present application claims priority from Indian application no. 202421074669, filed on October 03, 2024.

### TECHNICAL FIELD

The present invention generally relates to the field of software testing, and, more particularly, to a method and system for automated parametrized software testing.

### BACKGROUND

Rapid advancement of software development has led to an increased demand for reliable and efficient software testing. Traditional manual testing methods, while effective to some extent, are time-consuming, error-prone, and unable to keep up with the accelerated pace of modern software development cycles. In the situation of rigorous application releases or other infra upgrades in different pipelines (such as major, minor, or hotfix), regression and sanity tests must be performed very frequently which is currently done manually by a tester. Also, for every new release of the software, integration testing and release testing must be performed in addition to the regression and sanity tests which consume lot of time and efforts. Further, delivery of the software is prone to risk and errors as manual effort is required to test all use cases. Existing automated software testing tools automate only the test execution part while they still require a tester to manually write the test case templates and a developer has to pass required parameters to these test case templates. Hence, these existing tools cannot be used for rapid testing of a new code enhancement or a completely new software to be deployed within a short period of time.

### SUMMARY

Embodiments of the present disclosure present technological improvements as solutions to one or more of the above-mentioned technical problems recognized by the inventors in conventional systems. For example, in one embodiment, a method for automated parametrized software testing is provided. The method includes identifying a first set of parameters from a test automation suite for testing a web-based software application and determining a plurality of relevant test cases from among a set of predefined test cases based on the first set of parameters. Further, the method includes obtaining a second set of parameters related to the web-based software application and executing the plurality of relevant test cases based on the first set of parameters and the second set of parameters through at least one of: i) a code development tool, ii) a command with arguments, iii) a build tool, and iv) an application server. Furthermore, the method includes generating a report based on the execution of the plurality of relevant test cases. The report comprises one or more passed test cases, one or more failed test cases, and one or more skipped test cases, from among the plurality of relevant test cases. The one or more failed test cases are associated with an error message and stack traces.

In another aspect, a system for automated parametrized software testing is provided. The system includes: a memory storing instructions; one or more communication interfaces; and one or more hardware processors coupled to the memory via the one or more communication interfaces, wherein the one or more hardware processors are configured by the instructions to identify a first set of parameters from a test automation suite for testing a web-based software application and determine a plurality of relevant test cases from among a set of predefined test cases based on the first set of parameters. Further, the one or more hardware processors are configured by the instructions to obtain a second set of parameters related to the web-based software application and execute the plurality of relevant test cases based on the first set of parameters and the second set of parameters through at least one of: i) a code development tool, ii) a command with arguments, iii) a build tool, and iv) an application server. Furthermore, the one or more hardware processors are configured to generate a report based on the execution of the plurality of relevant test cases. The report comprises one or more passed test cases, one or more failed test cases, and one or more skipped test cases, from among the plurality of relevant test cases. The one or more failed test cases are associated with an error message and stack traces

In yet another aspect, there are provided one or more non-transitory machine-readable information storage mediums comprising one or more instructions which when executed by one or more hardware processors cause a method for automated parametrized software testing. The method includes identifying a first set of parameters from a test automation suite for testing a web-based software application and determining a plurality of relevant test cases from among a set of predefined test cases based on the first set of parameters. Further, the method includes obtaining a second set of parameters related to the web-based software application and executing the plurality of relevant test cases based on the first set of parameters and the second set of parameters through at least one of: i) a code development tool, ii) a command with arguments, iii) a build tool, and iv) an application server. Furthermore, the method includes generating a report based on the execution of the plurality of relevant test cases. The report comprises one or more passed test cases, one or more failed test cases, and one or more skipped test cases, from among the plurality of relevant test cases. The one or more failed test cases are associated with an error message and stack traces.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates an exemplary block diagram for automated parametrized software testing, according to some embodiments of the present disclosure.
FIG. 2 is a flow diagram illustrating a method for automated parametrized software testing, according to some embodiments of the present disclosure.
FIG. 3 illustrates example page classes, and a test class comprised in a web elements repository, according to some embodiments of the present disclosure.
FIG. 4 illustrates an example usage of a mapper file, according to some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Most of the existing testing tools automate the process of test case execution, however, they depend largely on an expert to manually write the test cases and pass parameters of the software to the test cases. Hence, they consume more time and are prone to errors due to manual intervention. This necessitates the implementation of automated software testing solutions that can ensure comprehensive testing coverage, detect defects early, and reduce overall development time and costs. Embodiments of present disclosure provide a method and system for automated parameterized software testing. The method involves 3 major steps - test case design, test case execution and report generation. The test case design involves identifying a first set of parameters from a test automation suite for testing a web-based software application. Then, based on the first set of parameters, relevant test cases are identified, and a second set of parameters are obtained from the web-based software application required for the identified test cases. Next, test case execution is done through at least one of: i) a code development tool, ii) a command with arguments, iii) a build tool, and iv) an application server. Finally, a report is generated based on test case execution indicating the status of the test cases (pass/fail/skip). Since the required parameters are automatically identified and extracted to design the test cases followed by automated test case execution and report generation, the disclosed method and system offers enhanced adaptability, reduced setup and maintenance effort, and comprehensive testing capabilities. Further, the present disclosure enables development of automation testcases easily to test various functional use cases across all non-production environments, capable of handling multiple out bound system like Browser stack, Gallen framework, Robot framework, and perform cross browser testing for all solution functional use case. The embodiments of present disclosure makes it easy to run maximum coverage of code which ensures that the testing completely covers all use cases.

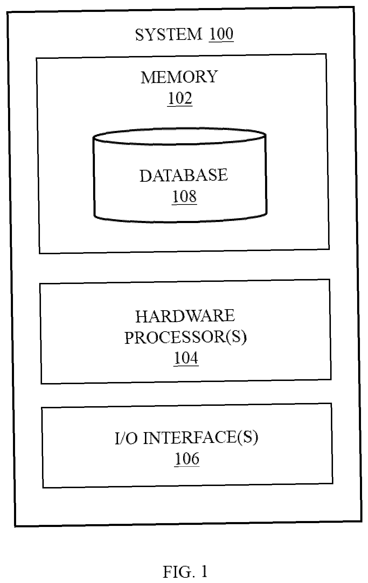

Referring now to the drawings, and more particularly to FIGS. 1 to 4, where similar reference characters denote corresponding features consistently throughout the figures, there are shown preferred embodiments, and these embodiments are described in the context of the following exemplary system and/or method.

FIG. 1 illustrates an exemplary block diagram of a system for automated parameterized software testing, according to some embodiments of the present disclosure. In an embodiment, the system 100 includes one or more processors 104, communication interface device(s) 106 or Input/Output (I/O) interface(s) 106 or user interface 106, and one or more data storage devices or memory 102 operatively coupled to the one or more processors 104. The one or more processors 104 that are hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is configured to fetch and execute computer-readable instructions stored in the memory. In an embodiment, the system 100 can be implemented in a variety of computing systems, such as laptop computers, notebooks, hand-held devices, workstations, mainframe computers, servers, a network cloud, and the like.

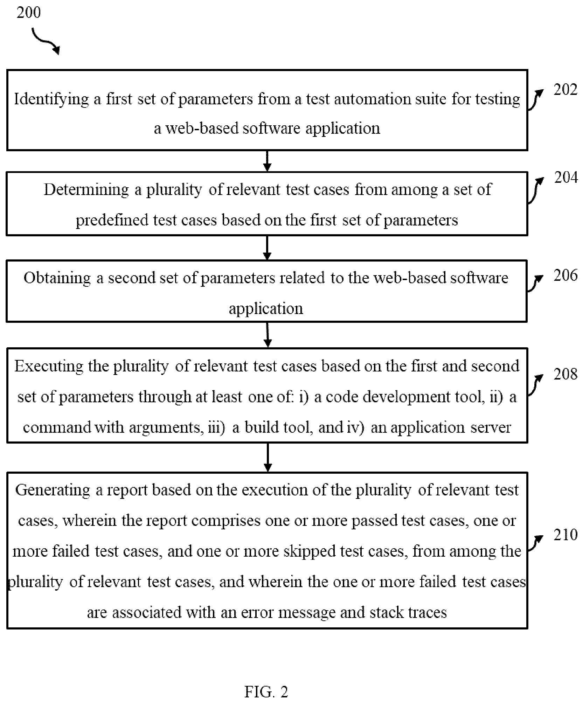

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. The memory 102 may include any computer-readable medium known in the art including, for example, volatile memory, such as Static Random-Access Memory (SRAM) and Dynamic Random-Access Memory (DRAM), and/or non-volatile memory, such as read only memory (ROM), erasable programmable ROM, flash memories, hard disks, optical disks, and magnetic tapes. The memory 102 stores instructions for executing the methodology described herein. In addition, the memory 102 stores code required to handle actions on web elements comprised in a web-based software application. The database 108 stores information pertaining to inputs fed to the system 100 and/or outputs generated by the system (e.g., at each stage), specific to the methodology described herein. Functions of the components of system 100 are explained in conjunction with flow diagram depicted in FIG. 2 for automated parameterized software testing.

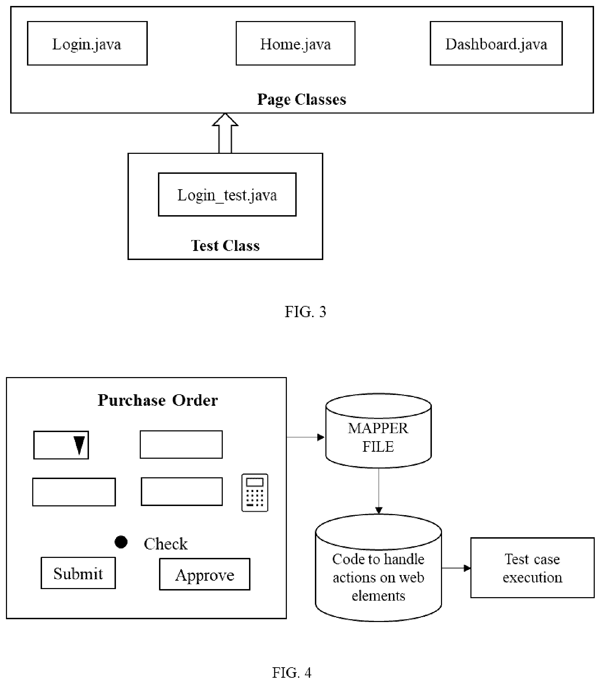

In an embodiment, the system 100 comprises one or more data storage devices or the memory 102 operatively coupled to the processor(s) 104 and is configured to store instructions for execution of steps of the method 200 depicted in FIG. 2 by the processor(s) or one or more hardware processors 104. The steps of the method of the present disclosure will now be explained with reference to the components or blocks of the system 100 as depicted in FIG. 1, the steps of flow diagram depicted in FIG. 2, block diagrams of FIGS. 3 and 4, for automated parameterized software testing. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

FIG. 2 is a flow diagram illustrating a method for automated parameterized software testing, according to some embodiments of the present disclosure. At step 202, the one or more hardware processors 104 are configured to identify a first set of parameters from a test automation suite for testing a web-based software application. The first set of parameters comprises a solution name, a type of test, a module, and a submodule. In an embodiment, the type of test include sanity test, regression test and the like. For example, consider a web-based software application used for conducting online examinations. Suppose the test automation suite has to perform sanity test on a solution named assessment life cycle management which has a module named ADC (assessment data center) and submodule create_adc. Then, the first set of parameters identified are: {Solution name: 'assessment_lifecycle_management', Type of test: 'sanity', Module: 'adc', Submodule: 'create_adc'}. Once the first set of parameters are identified, at step 204 of the method 200, the one or more hardware processors 104 are configured to determine a plurality of relevant test cases from among a set of predefined test cases based on the first set of parameters. In an embodiment, the set of predefined test cases have an associated attribute indicating at least one of a solution name, a type of test, a module, and a submodule. These attributes are compared with the first set of parameters obtained in step 202 to identify the plurality of relevant test cases. For example, if the attribute for group of test cases is assigned as 'Sanity' then those set of testcases are picked up by the system 100. If the test automation suite mentions a specific module name, then the test cases with respect to that module are determined as relevant test cases. In another embodiment, there is a flag associated with each of the set of predefined test cases indicating whether it is a sanity test, regression test, etc. Suppose the type of test identified in step 202 is sanity, then, test cases having sanity flag ON are selected as relevant test cases.

Once the relevant test cases are determined, at step 206 of the method 200, the one or more hardware processors 104 are configured to obtain a second set of parameters related to the web-based software application. The second set of parameters comprise a browser name, a URL (Uniform Resource Locator), a plurality of login credentials in an encrypted format, and one or more web locators. Each of the one or more web locators is a logical name given to each of one or more web elements comprised in the web-based software application. A mapping of the one or more web locators to the one or more web elements is obtained from a web elements repository while executing the plurality of relevant test cases. The web elements repository comprises one or more page classes, one or more test classes, and a mapper file. Each page class represents a webpage in the web-based software application and comprises a plurality of web elements in the web page (such as button, textbox, list etc.). Similarly, each test class represents actions performed in each of the webpages.

FIG. 3 illustrates example page classes (login.java, home.java and dashboard.java), and a test class (login_test.java) comprised in a web elements repository. Login.java is a page class containing all the web elements of a login page in a web application. Similarly, home.java and dashboard.java contain web elements of home page and dashboard page, respectively. The login_test.java is a test class having code to perform actions in the login page. The mapper file defines mapping of the plurality of web elements to a plurality of web locators. The web locators are used for test cases instead of directly using the web elements to avoid redundancy in web elements and to easily adapt to change in location of web elements when the software is upgraded. For example, suppose there is a logout button at top right corner of all the webpages in an application. A single web locator is assigned to this button web element. Suppose when the next version of the software is released, the location of logout button is changed to a position within a menu bar in all the webpages. Then, one needs to simply update the web locator in the mapper file, instead of changing position of the web element in all the test cases. This is the major advantage of using web locators.

FIG. 4 illustrates an example usage of a mapper file. A sample web page is shown on the left which has various web elements such as dropdown list (combo box), textbox, button, checkbox, etc. The mapper file defines mapping of the web elements to web locators with their logical names. Table 1 lists a few example entries in the mapper file corresponding to the web page illustrated in FIG. 4.

**Table 1**

| **Logical Name (Web locator)** | **Locator Type** | **Web Element** | **Element Type** |
|---|---|---|---|
| ion_mfg_common_submit_ btn | xpath | //input[@value='Submit'] | Button |
| ion_mfg_common _recordst atus | id | trhstatuslviid | Text Box |
| ion_mfg_common_Approv e_button | xpath | //input [contains (@id, 'Approve')] | Button |
| ion_mfg_common_view_ve ndorcode | id | trhpartycode | Text Box |
| ion _mfg_common_creation date | id | trhdate | Text Box |
| ion_mfg_common _transacti on_type | name | trhtransubtypelviid | Combo Box |
| ion_mfg_po_converttogin_ btn | CSS | button[onclick*="PO2GI N"] | Button |
| ion _mfg_pageheader | classname | contentareaheader | Text |
| ion _mfg_po_greenchannelfl ag | id | trhitemgreenchannelflag | Check Box |
| ion_mfg_po_pono | name | trhnumber | Text Box |

Code to handle actions on the one or more web elements is stored in the memory 102. Thus, at step 206, the one or more web locators are identified and obtained from the web-based software application, then they are mapped to the one or more web elements using the mapper file using which code to handle the one or more web elements is fetched from the memory 102. Once this is done, the one or more hardware processors 104 design the test cases by inserting the first and second set of parameters at appropriate locations in the plurality of relevant test cases. For example, suppose a task of testing a button click in a particular webpage is specified in the automation test suite. Then, the corresponding test case is designed by calling a method ButtonElementClick() with web locator corresponding to the button as parameter. The system handles this activity internally by fetching required code to handle button click from the memory 102. Once the test cases are designed, at step 208 of the method 200, the one or more hardware processors 104 are configured to execute the plurality of relevant test cases based on the first set of parameters and the second set of parameters through at least one of: i) a code development tool, ii) a command with arguments, iii) a build tool, and iv) an application server.

The code development tool is an application or a platform that facilitates creation, testing, debugging, and management of software projects. For example, Eclipse is a code development tool used for developing java based web applications. The plurality of relevant testcases can be run though eclipse by passing the second set of parameters. Complete success or failure of execution is captured with exact reason of failure which is easy to identify and rectify.

Another way to execute the test cases is through a command with arguments. For example, *java -jar <jar name> run --solution <solution name>module <moduleName> --submodule <submoduleName> --url <url> --browser chrome threads 5 --outdir outdirectory Location.* In this command, i) jar_name is a Java ARchive file that comprises the test case that has to be executed, ii) solution_name is the solution to which the test case belongs and is obtained from the first set of parameters, iii) moduleName is the name of module to which the test case belongs and is obtained from the first set of parameters, iv) submoduleName is the name of sub module to which the test case belongs and is obtained from the first set of parameters, v) url is the web-based software application's URL or host address, vi) browser is the web browser on which the web-based software application is run, for example, Google chrome, safari etc.

Third way of executing the test cases is through a build tool. The build tool is a program-based utility that can be structured as a command line to automate the application-building process. In Java^{®}, build tools compile code files into bytecode, packing it into resource libraries or executable files. Jenkins is an example of build tool. When test case execution starts, Jenkins collects all the input information and execute the testcases in Windows^{®} virtual system where the Jenkins is configured. Another way of executing the testcases is through the application server where the disclosed method and system can be deployed. Some example application servers are wildfly and jboss. The automation suite can run inside the server with headless mode where no physical browser exists.

Once the plurality of relevant test cases are executed, at step 210 of the method 200, the one or more hardware processors 108 are configured to generate a report based on the execution of the plurality of relevant test cases. The report comprises one or more passed test cases, one or more failed test cases, and one or more skipped test cases, from among the plurality of relevant test cases. The one or more failed test cases are associated with an error message and stack traces. In addition, the report may also include run parameters or pre-conditions, and run details. The run parameters include the first set and second set of parameters that are passed to the test cases. Run details consists of all the testcases including passed (green) and failed (red) test cases data in a tabular form. The test case identifier (ID), test description, test method name, date and time at the start of the testcase, time taken for the entire testcase execution (time elapsed), detail are present in column wise for each test case.

A major advantage of the disclosed method is that it can be easily integrated with a build tool (such as Jenkins). All the parameters which are required to run from build tool can be easily configurable. All the sanity and regression test suites can be run in bulk for any solution from Jenkins. It has the feature to auto schedule also which is a touch free execution. Once the execution is completed the execution report which gets generated at step 210 (detail Hypertext Markup Language (HTML) report) can be auto triggered through Jenkins to the respective solution team mailbox. So, it is a complete touch free execution where developers can get a report everyday which ensures all the developed functionalities are working fine before they start their daily task.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, non-volatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (200), comprising:
identifying (202), via one or more hardware processors, a first set of parameters from a test automation suite for testing a web-based software application;
determining (204), via the one or more hardware processors, a plurality of relevant test cases from among a set of predefined test cases based on the first set of parameters;
obtaining (206), via the one or more hardware processors, a second set of parameters related to the web-based software application;
executing (208), via the one or more hardware processors, the plurality of relevant test cases based on the first set of parameters and the second set of parameters through at least one of: i) a code development tool, ii) a command with arguments, iii) a build tool, and iv) an application server; and
generating (210), via the one or more hardware processors, a report based on the execution of the plurality of relevant test cases, wherein the report comprises one or more passed test cases, one or more failed test cases, and one or more skipped test cases, from among the plurality of relevant test cases, and wherein the one or more failed test cases are associated with an error message and stack traces.

2. The processor implemented method (200) as claimed in claim 1, wherein the first set of parameters comprises a solution name, a type of test, a module, and a submodule.

3. The processor implemented method (200) as claimed in claim 1, wherein the second set of parameters comprises a browser name, a Uniform Resource Locator (URL), a plurality of login credentials in an encrypted format, and one or more web locators.

4. The processor implemented method (200) as claimed in claim 3, wherein each of the one or more web locators is a logical name given to each of one or more web elements comprised in the web-based software application, and wherein a mapping of the one or more web locators to the one or more web elements is obtained from a web elements repository while executing the plurality of relevant test cases.

5. The processor implemented method (200) as claimed in claim 4, wherein the web elements repository comprises one or more page classes, one or more test classes, and a mapper file, wherein each of the one or more page classes comprise a plurality of web elements in each of one or more webpages comprised in the web-based software application, wherein each of the one or more test classes represent one or more actions performed in each of the one or more webpages, and wherein the mapper file defines mapping of the plurality of web elements to a plurality of web locators.

6. A system (100), comprising:
a memory (102) storing instructions;
one or more Input/Output (I/O) interfaces (106); and
one or more hardware processors (104) coupled to the memory (102) via the one or more communication interfaces (106), wherein the one or more hardware processors (104) are configured by the instructions to:
identifying a first set of parameters from a test automation suite for testing a web-based software application;
determine a plurality of relevant test cases from among a set of predefined test cases based on the first set of parameters;
obtain a second set of parameters related to the web-based software application;
execute the plurality of relevant test cases based on the first set of parameters and the second set of parameters through at least one of: i) a code development tool, ii) a command with arguments, iii) a build tool, and iv) an application server; and
generate a report based on the execution of the plurality of relevant test cases, wherein the report comprises one or more passed test cases, one or more failed test cases, and one or more skipped test cases, from among the plurality of relevant test cases, and wherein the one or more failed test cases are associated with an error message and stack traces.

7. The system (100) as claimed in claim 6, wherein the first set of parameters comprises a solution name, a type of test, a module, and a submodule.

8. The system (100) as claimed in claim 6, wherein the second set of parameters comprises a browser name, a Uniform Resource Locator (URL), a plurality of login credentials in an encrypted format, and one or more web locators.

9. The system (100) as claimed in claim 8, wherein each of the one or more web locators is a logical name given to each of one or more web elements comprised in the web-based software application, and wherein a mapping of the one or more web locators to the one or more web elements is obtained from a web elements repository while executing the plurality of relevant test cases.

10. The system (100) as claimed in claim 9, wherein the web elements repository comprises one or more page classes, one or more test classes, and a mapper file, wherein each of the one or more page classes comprise a plurality of web elements in each of one or more webpages comprised in the web-based software application, wherein each of the one or more test classes represent one or more actions performed in each of the one or more webpages, and wherein the mapper file defines mapping of the plurality of web elements to a plurality of web locators.

11. One or more non-transitory machine-readable information storage mediums comprising one or more instructions which when executed by one or more hardware processors cause:
identifying a first set of parameters from a test automation suite for testing a web-based software application;
determining a plurality of relevant test cases from among a set of predefined test cases based on the first set of parameters;
obtaining a second set of parameters related to the web-based software application;
executing the plurality of relevant test cases based on the first set of parameters and the second set of parameters through at least one of: i) a code development tool, ii) a command with arguments, iii) a build tool, and iv) an application server; and
generating a report based on the execution of the plurality of relevant test cases, wherein the report comprises one or more passed test cases, one or more failed test cases, and one or more skipped test cases, from among the plurality of relevant test cases, and wherein the one or more failed test cases are associated with an error message and stack traces.

12. The one or more non-transitory machine readable information storage mediums as claimed in claim 11, wherein the first set of parameters comprises a solution name, a type of test, a module, and a submodule.

13. The one or more non-transitory machine readable information storage mediums as claimed in claim 11, wherein the second set of parameters comprises a browser name, a Uniform Resource Locator (URL), a plurality of login credentials in an encrypted format, and one or more web locators.

14. The one or more non-transitory machine readable information storage mediums as claimed in claim 13, wherein each of the one or more web locators is a logical name given to each of one or more web elements comprised in the web-based software application, and wherein a mapping of the one or more web locators to the one or more web elements is obtained from a web elements repository while executing the plurality of relevant test cases.

15. The one or more non-transitory machine readable information storage mediums as claimed in claim 14, wherein the web elements repository comprises one or more page classes, one or more test classes, and a mapper file, wherein each of the one or more page classes comprise a plurality of web elements in each of one or more webpages comprised in the web-based software application, wherein each of the one or more test classes represent one or more actions performed in each of the one or more webpages, and wherein the mapper file defines mapping of the plurality of web elements to a plurality of web locators.
